## Europäisches Patentamt
## European Patent Office
## Office européen des brevets

(19)

(11) Veröffentlichungsnummer: **0 088 137**
**B1**

(12) # EUROPÄISCHE PATENTSCHRIFT

(45) Veröffentlichungstag der Patentschrift:
15.10.86

(51) Int. Cl.⁴: **H 01 G 4/24, H 01 G 1/01**

(21) Anmeldenummer: **82101789.4**

(22) Anmeldetag: **06.03.82**

(54) **Selbstheilender elektrischer Kondensator.**

(43) Veröffentlichungstag der Anmeldung:
14.09.83 Patentblatt 83/37

(45) Bekanntmachung des Hinweises auf die Patenterteilung:
15.10.86 Patentblatt 86/42

(84) Benannte Vertragsstaaten:
AT BE CH DE FR GB IT LI NL SE

(56) Entgegenhaltungen:
DE-A-2 826 481
GB-A-882 179

(73) Patentinhaber: Steiner KG, Industriegebiet Jägersgrund, D-5927 Erndtebrück (DE)

(72) Erfinder: Steiner, Holger, Elektro- Ing. grad., In der Baierbach 2, D-5927 Erndtebrück 3 (DE)

(74) Vertreter: Grosse, Dietrich, Dipl.- Ing., Patentanwälte F.W. Hemmerich, Gerd Müller, Dipl.- Ing. D. Grosse, Felix Pollmeier Hammerstrasse 2, D-5900 Siegen 1 (DE)

## Beschreibung

Die Erfindung betrifft einen selbstheilenden elektrischen Kondensator, insbesondere für Wechsel- bzw. Starkstrom, mit mindestens zwei als Dielektrikum vorgesehenen Folien, auf die jeweils von dem einen, dem Kontaktierungsrand, bis kurz vor den gegenüberliegenden Rand jeder Folie eine aus einer Legierung von Aluminium und Zink bestehende Metallschicht aufgetragen, vorzugsweise aufgedampft, ist.

Derartige Kondensatoren werden ihres geringen Volumens wegen verbreitet eingesetzt.

Vielfach besteht die als Elektrode aufgedampfte Metallschicht der leichteren Verarbeitbarkeit wegen aus Zink oder des geringen Widerstandes wegen aus Aluminium. Es hat sich jedoch gezeigt, daß bereits die Lagerfähigkeit mit Zink beschichteter Folien zu wünschen übrig läßt, und auch nach Erstellung des Kondensators und selbst bei sorgfältiger Abdichtung desselben ergeben sich unter den hohen im Betriebe auftretenden Feldstärken Veränderungen der Metallschicht, bspw. durch Oxidieren des gut leitenden Aluminiums zu praktisch isolierendem Aluminiumoxid, so daß wirksame Elektrodenflächen schwinden und die Kapazität des Kondensators unliebsam absinkt. Eine Steigerung der Foliendicke würde zwar die mittlere Feldstärke entsprechend absenken, die Oxidierungs- und Hydroxierungsvorgänge jedoch gehen nicht von der mittleren, sondern von an den Kanten und beispielsweise durch Staub oder dergleichen lokal stark überhöhten Feldstärken aus, und auf die Lagerfähigkeit bedampfter Folien hat deren Stärke keinen Einfluß.

Schon früh wurde vorgeschlagen, Metallschichten aus Zink zu bilden; zwar weist es eine höhere Korrosionsbeständigkeit auf als Aluminium, seines geringen elektrischen Leitwertes wegen ist es jedoch in größerer Dicke aufzudampfen, welche die Selbstheilung des daraus erstellten Kondensators zu beeinträchtigen vermag, und unvorteilhaft macht sich bemerkbar, daß die Korrosionsprodukte von Zink ein höheres Volumen aufweisen als deren Ausgangsschicht.

Eine höhere Beständigkeit der als Elektrodenbeläge vorgesehenen Metallschichten sollte erreicht werden, indem nach der DE-B-23 59 432 eine erste Schicht aus Chrom, Silber, Titan oder deren Legierungen von einer zweiten, stärkeren Schicht aus Aluminium überfangen werden sollte. Die DE-A-24 11 813 empfiehlt eine unter einer Aluminiumschicht angeordnete polykristalline Isolierschicht, und nach der DE-A-26 41 232 soll eine leitende Schicht aus Aluminium, Zink und/oder Kadmium durch Metallverbindungen, beispielsweise Oxide, unterfangen werden. Die DE-A-27 00 013 hingegen empfiehlt eine erste, stärkere Schicht aus Aluminium, die durch eine zweite Schicht geringerer Stärke überzogen sein soll, die durch Kupfer, Nickel, Kobalt, Titan, Wolfram oder Zink gebildet sein kann. Durch diese bekannten Maßnahmen wurde zwar die Korrosionsbeständigkeit des Aluminiums gesteigert, ohne daß aber das erwünschte Ausmaß dieser Steigerung erreicht und die angestrebte Beständigkeit der Folien erzielt bzw. der Kapazitätsverlust belasteter Kondensatoren energisch unterbunden wurden.

Nach den DE-A 27 03 636, 27 30 038 und 29 02 195 sollten daher als Elektroden vorgesehene Metallschichten aus Legierungen bestehen und zwar einer Legierung mit 15 bis 18 Atomprozent Aluminium und Kupfer, Zink, Mangan, Zinn, Silber, Chrom, Eisen und Blei als übrige Bestandteile, aber auch einer Aluminiumlegierung, die 0,5 bis 5 %, vorzugsweise 2 bis 5 % Kupfer oder aber auch, in intermetallische Verbindung, Aluminium, Nickel, Magnesium, Titan, Hafnium, Beryllium oder Wismut, enthalten sollten. Aber auch diese bezüglich ihres Aluminiumgehaltes diviergierenden Lehren ergaben weder die gewünschte unproblematische Lagerung für mit einer Metallschicht bedampfte Folien noch die angestrebte Kapazitätskonstanz unter Belastung.

Die Erfindung geht daher von der Aufgabe aus, eine als Elektrode auf für Kondensatoren vorgesehene Folien aufdampfbare Metallschicht zu finden, die sich bei der Lagerung der Folien als unkritisch erweist und keinerlei Korrosionserscheinungen zeigt, und die bei ihrer bestimmungsgemäßen Verwendung einen Kondensator ergibt, der auch unter hoher, dauernder Belastung praktisch keine Kapazitätsverluste zeigt.

Gelöst wird diese Aufgabe, indem die auf im gattungsgemäß ausgebildeten Kondensator verwendeten Folien aufgetragene, aus einer Legierung von Aluminium und Zink bestehende Metallschicht gemäß der Erfindung bei einem Aluminiumanteil der Zinklegierung der Metallschicht von 5 bis 40 Gewichtsprozenten einen Anteil des Aluminiums an der der Folie zugekehrten Seite der Metallschicht von mindestens 80 und an der der Folie abgekehrten Seite von weniger als 20 Gewichtsprozenten aufweist, und indem der Anteil des Aluminiums innerhalb der Metallschicht von ihrer der Folie zugekehrten zu deren abgekehrten Seite stetig abnimmt. Durch diesen Aufbau der Metallschicht ergibt sich eine ausgezeichnete Korrosionsbeständigkeit, die nicht nur eine problemlose Lagerung der metallisierten Folien erlaubt, sondern auch den Aufbau von Kondensatoren erlaubt, bei denen an die Abdichtung des Kondensatorbechers nur sehr geringe bzw. keine Anforderungen gestellt werden und gleichzeitig auch bei hoher Belastung sich nur minimale Kapazitätsverluste des Kondensators ergeben. Die hohe Korrosionsbeständigkeit erlaubt weiterhin die Nutzung relativ dünner Metallschichten, so daß das Auftragen derselben einen nur geringen Aufwand erfordert, und der fertig gestellte Kondensator ein hervorragendes Verhalten beim Selbstheilen aufweist. Insgesamt ergibt sich damit ein hochbelastungsfähiger Kondenator hoher Kapazitätskonstanz, wobei diese Eigenschaften auch durch nur mäßige Abdichtung des Kondensatorbechers oder lange Lagerung der metallbeschichteten Folien nicht beeinträchtigt werden.

Insbesondere bewährt haben sich Metallschichten, deren gemittelter Aluminiumanteil der Zinklegierung 8 bis 30 Gewichtsprozente, vorzugsweise 10 bis 25 Gewichtsprozente beträgt.

An Stelle einseitig beschichteter Folien können auch mindestens eine beidseitig eine Metallschicht aufweisende Folie sowie eine unmetallisierte Folie treten.

Zur Vermeidung von Kontaktierungsschwierigkeiten, die sich durch die gemäß der Erfindung ermöglichte geringe Stärke der Metallschicht ergeben könnten, kann die Stärke der Metallschicht am Kontaktierungsrand beginnend über eine 50% der Folienbreite unterschreitenden Teilbreite das zwei- bis sechsfache der Stärke des übrigen Bereiches der Metallschicht aufweisen.

Unter Folien im Sinne der Erfindung werden sowohl unterschiedliche Kunststoffolien wie solche aus Polypropylen oder Polyester als auch Papier und ähnliche als Dielektrikum für Kondensatoren geeignete Materialien ohne jede Einschränkung verstanden.

Im einzelnen wird die Erfindung anhand der folgenden Beschreibung von Ausführungsbeispielen in Verbindung mit diese darstellenden Zeichnungen erläutert. Es zeigen hierbei:

Fig. 1 einen Querschnitt einer einseitig metallbeschichteten Folie,

Fig. 2 den Querschnitt einer beidseitig beschichteten Folie, und

Fign. 3 und 4 den zeitlichen Kapazitätsverlust unterschiedlicher Kondensatoren aufzeigende Diagramme.

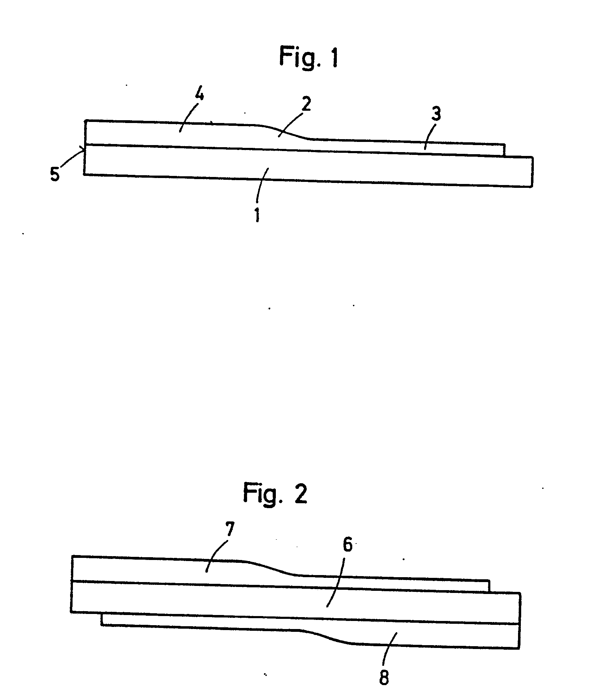

In Fig. 1 ist im Querschnitt in ihrer Stärke wesentlich stärker als in ihrer Länge vergrößert eine Folie 1 dargestellt, die aus einem als Dielektrikum geeigneten Kunststoff, aber auch aus anderen Dielektrika, wie z.B. imprägniertem bzw. zu imprägnierendem Papier oder auch aus mehreren solcher Schichten, die übereinander gelegt sind, besteht. Auf die Oberseite der Folie 1 ist eine Metallschicht 2 aufgetragen, deren rechts dargestellter Bereich nicht bis zum Folienrand reicht, und deren links gezeigter Schichtbereich 4 eine gegenüber dem Schichtbereich 3 erhöhte Stärke aufweist und bis zum Kontaktierungsrand 5 geführt ist. Hierbei erstreckt sich der Schichtbereich 4 erhöhter Stärke nur über eine 50% der Folienbreite unterschreitende Breite, er ist aber andererseits auch so breit gehalten, daß sich die Folie leicht und sicher zu Vorratswickeln ausreichenden Durchmessers wickeln läßt, so daß derartige Vorratswickel eine deren Handhabung erleichternde Stabilität aufweisen.

Die Metallschicht 2 ist in an sich bekannter Weise durch Aufdampfen auf die Folie erzeugt, wobei der von der Metallschicht 2 freibleibende Randstreifen der Folie während des Aufdampfens zweckmäßig abgedeckt wird, während der von der Metallschicht erfaßte Grund zur Erleichterung des Aufdampfens vorbekeimt sein kann.

Als wesentlich wurde gefunden, die Metallschicht aus einer Aluminium-Zink-Legierung zu bilden, deren Aluminiumgehalt im der Folie 1 zugewandten Bereiche der Metallschicht 2 mindestens 80% beträgt, während der Aluminiumgehalt auf der freistehenden, der Folie 1 abgewandten Seite weniger als 20 Gewichtsprozente beträgt. Der mittlere Aluminiumgehalt der Legierung kann hierbei zwischen 5 und 40 Gewichtsprozenten, vorzugsweise aber zwischen 8 bis 30 bzw. 10 bis 25 Gewichtsprozenten liegen.

Erzeugt werden kann eine derartige Metallschicht in einer mit Metallverdampfungsvorrichtungen ausgestatteten Vakuumkammer, deren Metallverdampfungsvorrichtungen mit Aluminium bzw. Zink oder zumindest Aluminium-Zink-Legierungen unterschiedlicher Konzentrationen beschickt sind. Der allmähliche Übergang der Aluminiumkonzentrationen in unterschiedlichen Stärkenbereichen der Metallschicht 2 läßt sich durch die von den Verdampfungsvorrichtungen ausgehenden Dämpfe leitende und ggf. drosselnde Blenden erzielen, so daß die Folie beim Durchlaufen des Aufdampfungsbereiches der Vakuumkammer zunächst Dämpfen ausgesetzt wird, die zumindest 80% Aluminium enthalten, während mit weiterem Vorlauf innerhalb der Aufdampfungsstrecke der Aluminiumdampf-Anteil entsprechend ab- und der Zinkdampfanteil entsprechend zunehmen.

Eine derart aufgedampfte Metallschicht weist eine ausgezeichnete Korrosionsbeständigkeit auf, so daß die Lagerung bereits bedampfter Folien unkritisch wird und durch übliche atmosphärische Einflüsse keinerlei Verluste der Kondensatorbeläge auftreten. Damit wird die Handhabung dieser Folien erheblich erleichtert, und es kann auch eine Vorratswirtschaft betrieben werden, die sich über längere Zeitabschnitte erstreckt, als dies bisher üblich war.

Die zu einem Kondensator gewickelten Folien erfahren auch unter dem Einfluß hoher Feldstärken, wie sie bei Starkstrombzw. Wechselstromkondensatoren oft vorliegen, keine Materialveränderungen, insbesondere keine Korrosionsvorgänge mit nicht leitendem Endprodukt, so daß die Beläge des Kondensators über lange Zeit konstant erhalten werden und damit der aus den Folien gebildete Kondensator praktisch keine Kapazitätsverluste erleidet.

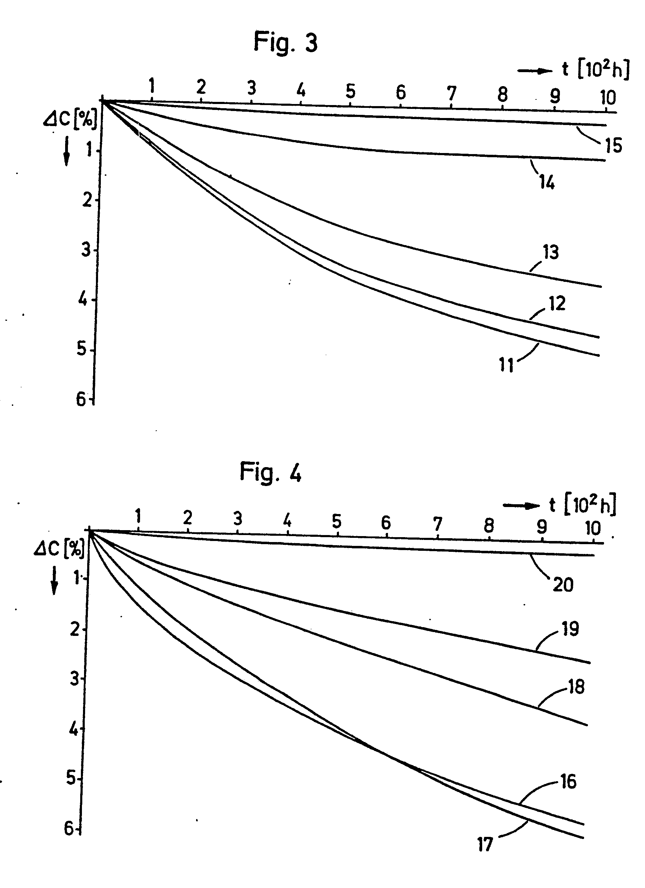

Praktische Versuche haben die Konstanz der Kapazität über lange Zeiten erwiesen. So wurden für den in Fig. 3 veranschaulichten Test unterschiedliche Polypropylen-Becherkondensatoren aus gleichen Folien, jedoch mit unterschiedlichen Belägen, gebildet und deren zeitlicher Kapazitätsverlust unter Belastung bei erhöhter Temperatur untersucht. Hierbei ergab sich für reine Zink-Metallschichten auf durch Aluminium vorbekeimten Flächen der durch die Kurve 11 angezeigte Kapazitätsverlust, der nach 1000 Stunden zu einer Kapazitätsverminderung von fast 5% führte. Bei mit Silber vorbekeimten Zink-Metallschichten ergab sich die Kurve 12, die einem 4,5 %igen Kapazitätsverlust nach 1000 Betriebsstunden entspricht. Mit Metallschichten aus einer Zink-Aluminiumlegierung ließ sich gemäß Kurve 13 der Kapazitätsverlust im Laufe von 1000 Betriebsstunden auf 3,5 % reduzieren, und eine starke Herabsetzung des Kapazitätsverlustes ergab sich durch eine Metallschicht, die im wesentlichen aus Aluminium besteht und durch eine dünne Zinkschicht abgedeckt ist: Gemäß Kurve 14 ergab sich innerhalb von 1000 Betriebsstunden ein Kapazitätsverlust von etwa 1%. Erfindungsgemäß ausgebildete Metallschichten erlaubten es jedoch, den unter · Belastung auftretenden Kapazitätsverlust gemäß Kurve 15 nochmals etwa um den Faktor 4 zu senken.

Die hohe Korrosionsbeständigkeit der gemäß der Erfindung ausgebildeten Metallschichten erlaubt auch den Aufbau offener Kondensatoren, die damit dem Einfluß der atmosphärischen Luft stärker ausgesetzt sind, ohne daß hierbei wesentliche Kapazitätsverluste durch Korrosion zu befürchten sind. Auch hier wurden praktische Belastungsversuche zum Vergleich der sich bei unterschiedlichen Metallschichten ergebenden Kapazitätsverluste angestellt. In Fig. 4 sind in einer der Fig. 3 entsprechenden Darstellung die prozentualen Kapazitätsverluste offener Propylen-Kondensatoren zusammengestellt. Bei mit Aluminium vorbekeimten Zinkschichten · ergibt sich nach 1000 Betriebsstunden gemäß Kurve 16 ein Kapazitätsverlust von über 5,6 %, während mit Silber vorbekeimte Zinkschichten gemäß Kurve 17 einen Kapazitätsverlust von nahezu 6% erleiden. Bessere Resultate lassen sich gemäß Kurve 18 wiederum mit Zink-Aluminium-Legierungen der Metallschichten der Folien des Kondensators erreichen: Kurve 18 führt nach 1000 Betriebsstunden zu einem Kapazitätsverlust von 3,7%, während durch dünne Zinkschichten abgedeckte Aluminium-Metallschichten gemäß Kurve 19 einen Kapazitätsverlust von 2,4% erfahren. Die Kurve 20 zeigt an, daß bei Aluminium-Zink-Metallschichten gemäß der vorliegenden Erfindung auch bei offener Bauweise kein zusätzlicher Kapazitätsverlust auftritt: Nach 1000 Betriebsstunden ist die Kapazität nur um 0,25% abgefallen.

Die praktischen Versuche zeigen, daß selbst bei geschlossenen Becherkondensatoren und damit geschützter Metallschicht die Beständigkeit der Metallschichten und der Folien und damit die Konstanz der Kapazität des aus diesen Folien erstellten Kondensators um einen zwischen 3 und 4 liegenden Faktor höher ist als die der besten bekannten Metallschichten, und daß diese hohe Kapazitätskonstanz, abweichend vom Verhalten bekannter Metallschichten, sich nicht verschlechtert, wenn von der geschlossenen zur wesentlich billigeren offenen Ausführung des Kondensators übergegangen wird.

Die hohe Korrosionsbeständigkeit läßt darüber hinaus es zu, dünnere Metallschichten zu verwenden, als dies bisher üblich ist. Solche dünneren Metallschichten weisen ein günstigeres Selbstheil-Verhalten auf, und es erweist sich darüber hinaus als günstig, daß zum Freibrennen einer Durchschlagstelle bei dünneren Metallschichten auch nur geringere Energiemengen erforderlich sind, so daß letztlich auch die beim Freibrennen freiwerdenden Sekundärprodukte, die weitere Bereiche des Kondensators schädigen können, vermindert werden. Bei solch dünneren Metallschichten allerdings erweist sich als vorteilhaft, die Metallschicht 2, wie in Fig. 1 gezeigt, zumindest im Bereiche des Kontaktierungsrandes 5 gegenüber den übrigen Bereichen verstärkt auszuführen, wobei die Stärke durchaus um den Faktor 2 bis 6 erhöht werden kann. Die Kontaktierung wird durch die stärkere anstehende Stirnfläche erleichtert, verbessert und gesichert; aber auch das Selbstheilverhalten wird nicht negativ beeinflußt, da einem verstärkten Schichtbereich ja immer ein schwächerer gegenübersteht und die zum Ausbrennen eines Schlusses aufzubringenden Energien sich nach dem Bedarf der schwächeren Metallschicht richten.

Schließlich ist es nicht erforderlich, jede der Folien eines Kondensators einseitig zu beschichten: in an sich bekannter Weise ist es auch möglich, Folien doppelseitig zu beschichten, so daß sie im Verein mit zwischengelegten unbeschichteten Folien zum fertigen Kondensator zu wickeln sind. Gemäß Fig. 2 weist demnach die Folie 6 Metallschichten 7 und 8 auf, die wiederum in einem an den jeweiligen Kontaktierungsrand grenzenden Bereiche stärker ausgeführt sind als in ihrem abgewandten Längenbereich.

Wenn auch im allgemeinen von Kunststoffolien als Träger der Metallschicht ausgegangen ist, lassen sich jedoch als Folie alle als Dielektrikum verwendbaren Stoffbahnen einsetzen. Die hohe Korrosionsbeständigkeit der erfindungsgemäß ausgebildeten Metallschichten ergibt nicht nur eine hohe Kapazitätsbeständigkeit eines aus den Folien erstellten Kondensators, die an die Abdichtung eines Kondensatorbechers zu stellenden Anforderung können auch gesenkt werden bzw. entfallen, so daß sich eine verbilligte Herstellung ergibt. Darüber hinaus läßt sich die Erstellung erfindungsgemäßer Kondensatoren dadurch weiterhin rationalisieren und verbilligen, daß die Lagerung der zu seiner Erstellung benötigten beschichteten Folien unproblematisch wird, so daß die Vorratshaltung vereinfacht wird und sich über längere Zeit erstrecken können als dies bisher ratsam war. Die hohe Korrosionsbeständigkeit erlaubt auch die Anwendung dünnerer Metallschichten, als sie bisher üblich waren, und ergibt damit ein ausgezeichnetes Selbstheilverhalten; es ist jedoch nicht erforderlich, die Stärke der Metallschichten soweit abzusenken, daß die an sich empfehlenswerte Verstärkung am Kontaktierungsrand benutzt werden müßte.

**Patentansprüche**

1. Selbstheilender elektrischer Kondensator, insbesondere für Wechsel- bzw. Starkstrom, mit mindestens zwei als Dielektrikum vorgesehenen Folien, auf die jeweils von dem einen, dem Kontaktierungsrand, bis kurz vor den gegenüberliegenden Rand jeder Folie eine aus einer Legierung von Aluminium und Zink bestehende Metallschicht aufgetragen, vorzugsweise aufgedampft, ist,
   dadurch gekennzeichnet,
   daß bei einem gemittelten Aluminiumanteil der Zinklegierung der Metallschicht (2, 7, 8) von 5 bis 40 Gewichtsprozenten der Anteil des Aluminiums an der der Folie (1, 6) zugekehrten Seite der Metallschicht mindestens 80 und an der der Folie abgekehrten Seite weniger als 20 Gewichtsprozente beträgt, und daß der Anteil des Aluminiums innerhalb der Metallschicht von ihrer der Folie zugekehrten zu deren abgekehrten Seite stetig abnimmt.
   2. Kondensator nach Anspruch 1,
   dadurch gekennzeichnet,
   daß der gemittelte Aluminiumanteil der Aluminiumlegierung der Metallschicht (2, 7, 8) 8 bis 30 Gewichtsprozente, vorzugsweise 10 bis 25 Gewichtsprozente, beträgt.
   3. Kondensator nach Anspruch 1 oder 2,
   dadurch gekennzeichnet,
   daß anstelle zweier einseitig beschichteter Folien eine beidseitig eine Metallschicht (7, 8,) aufweisende Folie (6) sowie eine unmetallisierte Folie vorgesehen, sind.
   4. Kondensator nach einem der Ansprüche 1 bis 3,
   dadurch gekennzeichnet,
   daß die Stärke der Metallschicht (2, 7, 8) am Kontaktierungsrand (5) beginnend über eine 50% der Breite der Folie (1, 6) unterschreitende Teilbreite das zwei- bis sechsfache der Stärke der übrigen Bereiche der Metallschicht aufweist.

**Claims**

1. A self-sealing electrical capacitor, especially for alternating or respectively high-voltage current, having at least two foils provided as dielectric, to each of which is applied preferably by vapour deposition a metallic layer consisting of an alloy of aluminium and zinc from the one edge at which contact is made, until shortly before the opposite edge of each foil,
   characterized in that
   in the case of an average proportion of aluminium in the zinc alloy of the metallic layer (2, 7, 8) of from 5 to 40 percent by weight the proportion of aluminium at the side of the metallic layer next the foil (1, 6) amounts to at least 80 percent by weight and at the side remote from the foil to 20 percent by weight, and that the proportion of aluminium inside the metallic layer decreases constantly from the side of it next the foil to the side remote from the latter.
   2. A capacitor as in Claim 1,
   characterized in that
   the average proportion of aluminium in the aluminium alloy of the metallic layer (2, 7, 8) amounts to from 8 to 30 percent by weight, preferably from 10 to 25 percent by weight.
   3. A capacitor as in Claim 1 or 2,
   characterized in that
   instead of two foils coated on one side one foil (6) exhibiting a metallic layer (7, 8) on both sides as well as one unmetallized foil are provided.
   4. A capacitor as in one of the Claims 1 to 3,
   characterized in that
   the thickness of the metallic layer (2, 7, 8) starting at the edge (5) at which contact is made, exhibits across a partial width not exceeding 50% of the width of the foil (1, 6) from twice to six times the thickness of the remaining regions of the metallic layer.

**Revendications**

1. Condensateur électrique à auto-régénération, notamment pour courant alternatif ou de haute intensité, qui comprend au moins deux feuilles minces constituant le diélectrique sur lesquelles est appliquée, de préférence par dépôt de produit vaporisé, depuis l'un des bords de chaque feuille, son bord de contact, jusqu'à une faible distance avant son autre bord, une couche métallique constituée par un alliage d'aluminium et de zinc, caractérisé en ce que, pour une valeur moyenne de 5 à 40% en poids de la proportion d'aluminium dans l'alliage de zinc de la couche métallique (2, 7, 8), la proportion d'aluminium est d'au moins 80% en poids au niveau du côté de la couche métallique qui est contigü à la feuille mince et de moins de 20% en poids au niveau du côté situé à l'opposé de la feuille mince et en ce que 12 proportion d'aluminium à l'intérieur de la couche métallique diminue régulièrement depuis le côté contigü à la feuille mince jusqu'au côté opposé.
   2. Condensateur selon la revendication 1, caractérisé en ce que la valeur moyenne de la proportion d'aluminium de l'alliage d'aluminium de la couche métallique (2, 7, 8) est de 8 à 30% en poids, de préférence de 10 à 25% en poids.
   3. Condensateur selon l'une des revendications 1 ou 2, caractérisé en ce qu'il comporte, au lieu de deux feuilles minces recouvertes d'un seul côté, une feuille mince (6) portant sur ses deux côtés une couche métallique (7, 8) ainsi au'une feuille mince non métallisée.

4. Condensateur selon l'une des revendications 1 à 3, caractérisé en ce que l'épaisseur de la couche métallique (2, 7, 8) représente, à partir du bord de contact (5), sur une largeur partielle inférieure à 50% de la largeur de la feuille mince (1, 6), deux à six fois l'épaisseur des autres zones de la couche métallique.

## Fig. 1

## Fig. 2

## Fig. 3

## Fig. 4